# EUROPEAN PATENT SPECIFICATION

(11) **EP 2 890 086 B1**
(45) Date of publication and mention of the grant of the patent: **27.07.2016**
(21) Application number: 13382555.4
(22) Date of filing: 26.12.2013
(51) Int. Cl.: H04L 29/08

(54) **Method and farm load balancing device for establishing a bi-directional server to server communication and computer program thereof**
Verfahren und Farmlastausgleichsvorrichtung zur Herstellung einer bidirektionalen Server-zu-Server-Kommunikation und Computerprogramm dafür
Procédé et dispositif d'équilibrage de charge d'élevage pour établir une communication bidirectionnelle de serveur à serveur et programme d'ordinateur correspondant

(43) Date of publication of application: 01.07.2015
(73) Proprietor: Telefonica Digital España, S.L.U., 28013 Madrid (ES)
(72) Inventor: Massover, Alex, 28013 Madrid (ES); Neystadt, John, 44471 Kfar-Saba (IL)
(74) Representative: Carlos Hernando, Borja

(56) References cited:
- US-B2- 6 473 802
- US-B2- 7 380 002

## Description

### Field of the invention

The present invention is generally related within the field of network communications systems and methods. Particularly, the present invention relates to a method, a farm load balancing device and a computer program product for establishing a bi-directional affinity server to server communication.

### Background of the invention

In existing load balancers, there are many mechanisms to ensure affinity between a client/server and a load balanced server farm, ensuring that all requests belonging to a same session are always directed to the same server instance within the farm.

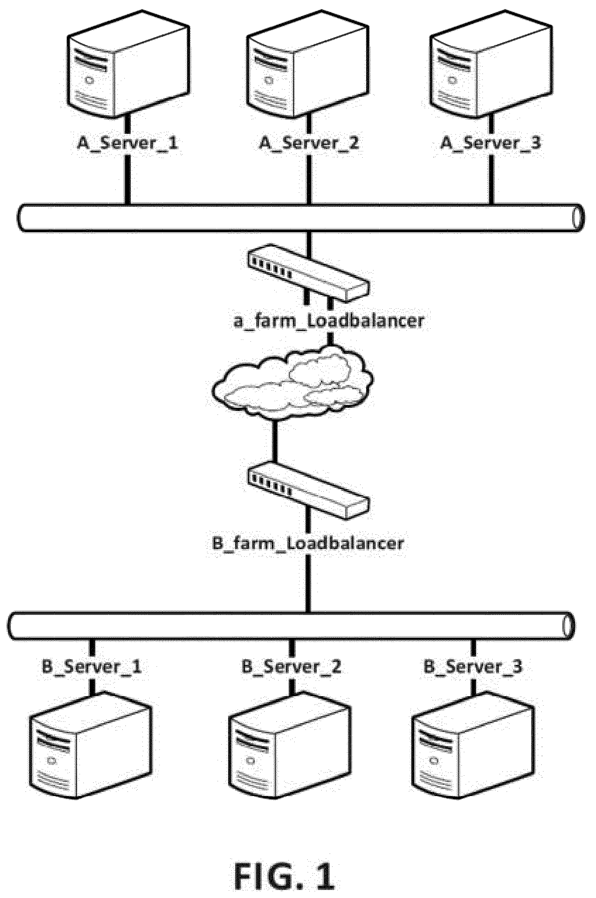

An unsolved problem in server to server communication scenarios (Fig. 1) is when a farm A consisting of multiple load balanced servers want to communicate with a farm B, also consisting of multiple load balanced servers. In this case, when each farm manages its own session (application stateful servers), a stickiness to specific server instance is required in a bi-directional way, so that all requests belonging to a session on farm A will always communicate with a specific server in farm B and all requests belonging to a corresponding session on farm B will always be routed to the same server in farm A.

Existing load balancers in the field can perform such bi-directional affinity for Layer 3 and 4 protocols (IP/UDP/TCP) as describe in patent US-B2-7380002, however no solution currently exists for Layer-7 protocols, such as HTTP, Radius, or others.

A common method for creating client-server affinity based on HTTP cookies is described in patent US-B2- 6473802. Although said patent doesn't solve the problem of server to server stateful communication in case both servers perform both client and server role in client-server model. For instance, each load balancer (A_Farm_Loadbalancer or B_Farm_Loadbalancer in Fig.1) in said patent will just implement client-server affinity method, that is, a session started from Farm A will be sticky to some server in Farm B, and corresponding session from Farm B will be also sticky to some server in Farm A, but there's no guarantee that it will be sticky to the same server, which started original session. So, the missing piece for creating bidirectional affinity in that case is the fact that no single load balancer is aware of both sessions and therefore isn't able to maintain a mapping of sessions.

### Summary of the invention

Therefore, the present invention overcomes the limitations described above by providing a method that creates a single point in the flow (load balancer) that both sessions will pass it at a network layer. Moreover, it creates stickiness based on the transaction requests and bi-directional affinity by correlating the requests of different sessions and maintaining correlation mapping.

Present invention enables to start a session on a first farm A, and correlate it to a new corresponding session in a second farm B, having load balancer to maintain a mapping between the two communication sessions (sessions are tracked using known mechanisms such as HTTP header, cookies, or URL parameters) in order to guarantee stickiness between the two communication sessions to the same server instances.

According to a first aspect there is provided a method for establishing a bidirectional server to server communication, wherein a first farm load balancer having associated a plurality of client servers comprises: a) receiving a first application level protocol request from at least one of said clients servers to start a first communication session with any of a client server associated to a second farm load balancer, said first application level protocol request including information parameters at least including a session ID that identifies the client server of the first farm load balancer; and b) sending said first application level protocol request to a client server of the second farm load balancer through the latter. Then, the client server of the second farm load balancer can respond to the first application level protocol request through said second farm load balancer.

On contrary to the known proposals the first farm load balancer further performs following steps: c) receiving a second application level protocol request from said client server of the second farm load balancer in order to start a second communication session with the client server of the first farm load balancer, said second application level protocol request including information parameters at least including a session ID that identifies the client server of the second farm load balancer and the session ID that identifies the client server of the first farm load balancer; d) checking in said received second application level protocol request if the session ID that identifies the client server of the first farm load balancer matches with the one included in the first application level protocol; and e) in case of matching, sending said second application level protocol request to the client server of the first farm load balancer, enabling the later for a response.

In accordance with an embodiment, the session ID of the client server of the first farm load balancer is included in said second application level protocol request upon extracting it, said client server of the second farm load balancer, from said received first application level protocol request.

The second application level protocol request in said step c) can be received either directly from the client server of the second farm load balancer or indirectly by using the second farm load balancer.

The response of the client server of the first farm load balancer in said step e) can be also performed directly to the client server of the second farm load balancer or indirectly through the latter.

The first and second application level protocols according to different embodiments can be the same or different protocols. Generally, those application level protocols are application-layer protocols using a client-server model. According to said different embodiments both application level protocols will be selected from at least a Hyper Text Transport Protocol (HTTP), a Remote Authentication Dial In User Service (RADIUS) protocol, a Session Initiation Protocol (SIP) protocol, or combinations thereof.

According to a second aspect there is provided a farm load balancing device for establishing a bi-directional server to server communication, said farm load balancing device having associated a plurality of client servers and being configured to: receive a first application level protocol request from at least one of said clients servers in order to start a first communication session with any of a client server associated to a second farm load balancer, said first application level protocol request including information parameters at least including a session ID that identifies its client server; and send said first application level protocol request to a client server of a second farm load balancer through the latter. The farm load balancing device also includes first means for extracting from the first application level protocol request said included session ID that identifies its client server.

On contrary of the known proposals, the farm load balancing device of the second aspect of the present invention is further configured to: receive a second application level protocol request from the client server of the second farm load balancer to start a second communication session its own client server, said second application level protocol request including information parameters at least including a session ID that identifies the client server of the second farm load balancer and the session ID that identifies its own client server; and send, depending on a checking operation, said second application level protocol request to its own client server (SA). In addition, the proposed farm load balancing device further comprises second means for performing said checking operation by checking in said received second application level protocol request if the session ID that identifies its own client server matches with the one included in the first application level protocol.

In accordance with an embodiment, the farm load balancing device is further configured to receive a response to the first application level protocol request from the client server of the second farm load balancer through the latter and to forward said response to its own client server.

Furthermore, the farm load balancing device is able similarly to receive a response to the second application level protocol request from its own client server and to forward said response to the client server of the second farm load balancer either directly or through the latter.

The system of the second aspect is adapted to implement the method of the first aspect.

The subject matter described herein can be implemented in software in combination with hardware and/or firmware, or a suitable combination of them. For example, the subject matter described herein can be implemented in software executed by a processor.

According to a third aspect there is provided a computer program product comprising a computer usable medium having a computer readable program code embodied therein, said computer readable code adapted to be executed to implement a method for establishing a bidirectional server to server communication comprising steps a to e of claim 1.

### Brief Description of the Drawings

The previous and other advantages and features will be more fully understood from the following detailed description of embodiments, with reference to the attached, which must be considered in an illustrative and non-limiting manner, in which:
Fig. 1 illustrates a server to server communication scenario where the present invention could be implemented.
Fig. 2 is a flow chart illustrating the method of the first aspect for performing a server to server communication with bi-directional session affinity according to several embodiments, in this case particularly when the first and the second application level protocols are the same protocol, e.g. an HTTP protocol.
Fig. 3 is an example of the decision logic that a farm load balancer could execute to create affinity to a particular client server.
Fig. 4 is a flow chart illustrating the method of the first aspect for performing a bi-directional session affinity server to server communication according to several embodiments, in this case particularly when the first and the second application level protocols are different protocols, e.g. an HTTP protocol and a Radius protocol.

### Detailed Description of Several Embodiments

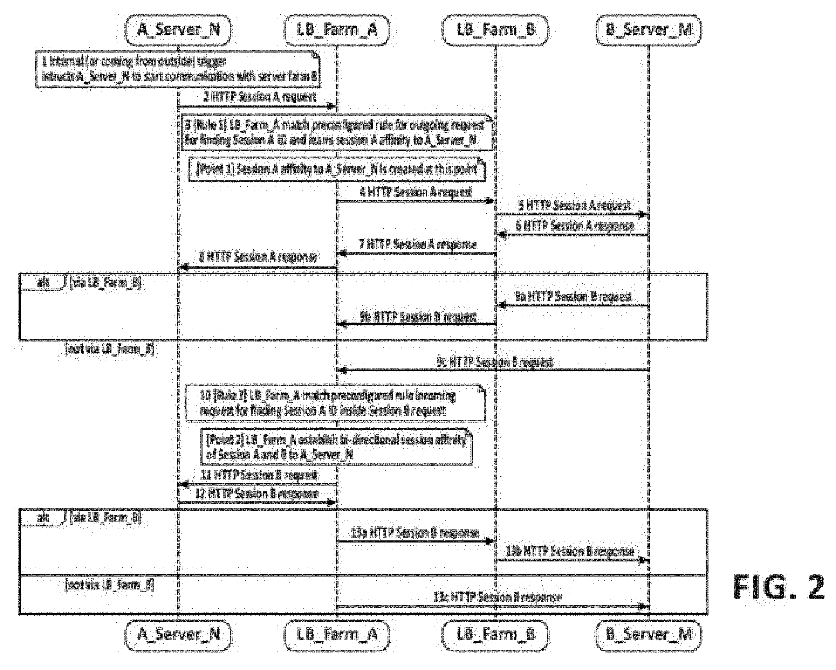

In reference to Fig. 2 it is illustrated the proposed method for establishing a bi-directional server to server communication. In this particular embodiment, the bi-directional session affinity server to server is performed over the same application level protocols, in this case an HTTP protocol.

As illustrated in Fig. 2, an external event or an internal state change instructs a particular client server A_Server_N of a first farm load balancer LB_FARM_A to start a communication session with a client server B Server M from a second farm load balancer LB_FARM_B (1). So, the client server A_Server_N requests the establishment of an HTTP session (Session A request as termed in Fig. 2) to the first farm load balancer LB_FARM_A by including in the HTTP session request, information parameters that identify the client server A_Server_N such as its session ID (2).

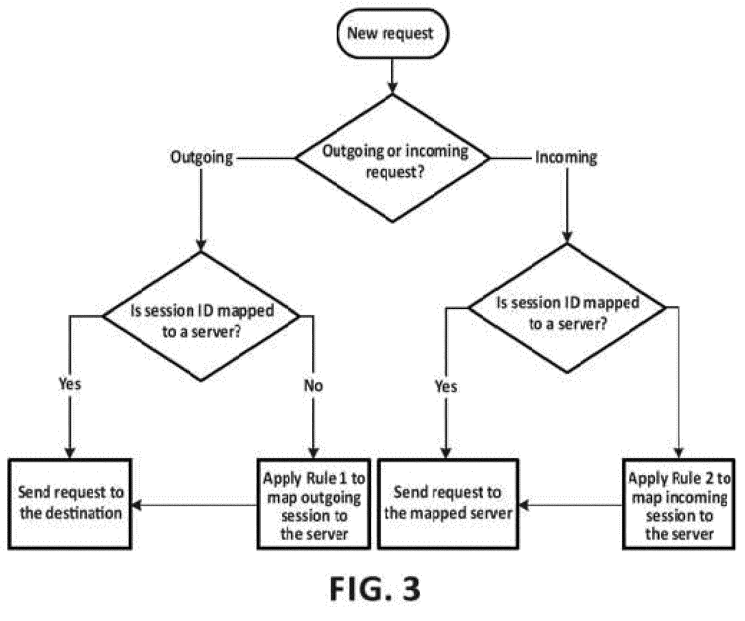

First farm load balancer LB_Farm_A upon receiving said HTTP session request executes a decision logic, as illustrated in Fig. 3, to match a preconfigured rule (Rule 1) for an outgoing request. That is, first farm load balancer LB_Farm_A finds session A ID in the received HTTP session request and learns the session affinity with said client server A_Server_N (3). Then, first farm load balancer LB_Farm_A sends the HTTP session request to said second farm load balancer LB_Farm_B (4) and the latter forwards the HTTP session request to said client server B_Server_M (5). Client server B_Server_M at that time can send a response to the HTTP session request through the second farm load balancer LB_Farm_B (6, 7 and 8).

Then, client server B_Server_M sends a communication session request (HTTP Session B request as termed in Fig. 1) to the first farm load balancer LB_Farm_A either directly (9c) or alternatively via the second farm load balancer LB_Farm_B (9a and 9b). Said HTTP session B request includes at least a session ID that identifies the client server B_Server_M and the session ID that identifies the client server A_Server_N.

Therefore, the first farm load balancer LB_Farm_A upon receiving the HTTP session B request executes said decision logic illustrated in Fig. 3 to match a preconfigured rule (Rule 2) for an incoming request checking if the session ID that identifies the client server A_Server_N matches with the one included in the HTTP session A request (10). In case of matching, the first farm load balancer LB_Farm_A sends the HTTP session B request to its client server A_Server_N (11), enabling the later for a response. If client server A_Server_N (12) responds to the HTTP session B request to the first farm load balancer LB_Farm_A, the latter can forward said response either directly to the client server B_Server_M (13c) or indirectly via the second farm load balancer LB_Farm_B (13a and 13b).

The HTTP session requested by the client server A_Server_N (or HTTP Session A request) could be as follows:
*POST*/*farm_b*/*form.asp HTTP*/*1.1*
*Host: farm_a*
*SID: ANON: farm_a; "NRviasdfmdkY84W2471I"*

That is, it includes the "SID" header, which identifies the session at the client server A_Server_N. Consequently, the HTTP session requested by the client server B_Server_M or HTTP Session B request would be as follows:
*POST* /*farm_a*/*form.asp HTTP*/*1.1*
*Host: farm_b*
*SID: ANON: farm_6; asdfVVdfmdkYB4wsrtV*
*Original_ID: "NRviasdfmdkYB4W2471I"*

That is, includes the "SID" header, which identifies the session at the client server B_Server_M, and the "*Original*_*ID*" *header,* which identifies the session at the client server A_Server_N

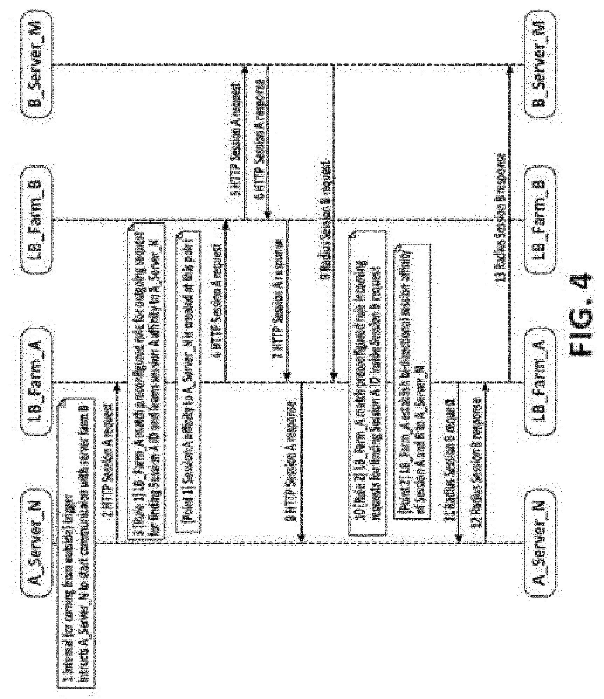

In reference to Fig. 4, it is illustrated the proposed method for establishing a bi-directional session affinity stateful server to stateful server communication over different Layer-7 protocols, which implement a client-server model such as HTTP and Radius protocols. The described flows in this case will be the same as the flows described in Fig. 2 with the only difference that the session B request demanded by the client server B_Server_M will be a Radius session request. The Radius session requested by the client server B_Server_M according to this particular embodiment could be a follows:
*1 Code = Access-Request (1)*
*1 ID* = *0*
*2 Length* = 56
*16 Request Authenticator Attributes:*
*6 User-Name = "nemo"*
*18 User-Password*
*6 NAS-IP-Address = 192.168.1.16*
*6 NAS-Port = 3*
*44 Acct-Session-Id= 00000016*
*50 Acct-Multi-Session-Id = "NRviasdfmdkYB4W2471I"*

That is, it includes the *"Acct-Session-Id"* header, which identifies the session at the client server B_Server_M, and the *"Acct-Multi-Session-Id" header,* which identifies the session at the client server A_Server_N

As an improvement of the invention, the first farm load balancer LB_Farm_A, once executed said rules and established the affinity of the different client servers (A_Server_N with B_Server_M) can create a mapping table storing all the linked information. For instance, in accordance to the embodiment of Fig. 2, upon having executed said rule 1, flow (3) of the figure, it could create the following mapping table:

| Rule 1 | Rule 2 | Outgoing Session ID | Incoming Session ID | Affinity to the server |
|---|---|---|---|---|
| a) Match HTTP protocol | c) Match HTTP protocol | NRviasdf mdkYB4W 24711 | | A_Server_N |
| | d) Match 'Original_ID' header value for matching with outgoing Session ID | | | |
| b) Match Session Identification URI, identifier field value | | | | |
| | e) Match Session Identification URI, identifier field value as Incoming Session ID | | | |

And, upon having executed said rule 2, flow (10) of the figure, it could create the following mapping table:

| Rule 1 | Rule 2 | Outgoing Session ID | Incoming Session ID | Affinity to the server |
|---|---|---|---|---|
| a) Match HTTP protocol | c) Match HTTP protocol | NRviasdfm | asdfVVdfm | A_Server_N |
| | d) Match 'Original_ID' header value for matching with outgoing Session ID | dkYB4W24 711 | dkYB4wsrt V | |
| b) Match Session Identificati on URI, identifier field value | | | | |
| | e) Match Session Identification URI, identifier field value as Incoming Session ID | | | |

In the same way, in accordance to the embodiment of Fig. 4, the following mapping tables could be also created:

| Rule 1 | Rule 2 | Outgoing Session ID | Incoming Session ID | Affinity to the server |
|---|---|---|---|---|
| a) Match HTTP protocol | c) Match RADIUS protocol | NRviasdf | | A_Server_N |
| | d) Match Acct-Multi-Session-ID attribute value for matching with outgoing Session ID | mdkYB4 W2471I | | |
| b) Match Session Identificatio n URI, identifier field value | | | | |
| | e) Match Acct-Session-Id attribute value as Incoming Session ID | | | |
| a) Match HTTP protocol | c) Match RADIUS protocol | NRviasdf | 00000016 | A_Server_N |
| | d) Match Acct-Multi-Session-ID attribute value for matching with outgoing Session ID | mdkYB4 W2471I | | |
| b) Match Session Identifica tion URI, identifier field value | | | | |
| | e) Match Acct-Session-Id attribute value as Incoming Session ID | | | |

The scope of the present invention is defined in the following set of claims.

## Claims

1. Method for establishing a bi-directional server to server communication, wherein a first farm load balancer (LB_FARM_A) having associated a plurality of client servers (A_Server_N) performs following steps:
a) receiving a first application level protocol request from at least one of said clients servers (A_Server_N) to start a first communication session with any of a client server associated to a second farm load balancer (LB_FARM_B), said first application level protocol request including information parameters at least including a session ID (ID_A) that identifies said first client server (A_Server_N); and
b) sending said first application level protocol request to a second client server (B_Server_N) through said second farm load balancer (LB_FARM_B), and said second client server (B_Server_N) responding to the first application level protocol request through said second farm load balancer (LB_FARM_B),
**characterized in that** said first farm load balancer (LB_FARM_A) further performs following steps:
c) receiving a second application level protocol request from said second client server (B_Server_N) to start a second communication session with the first client server (A_Server_N), said second application level protocol request including information parameters at least including a session ID (ID_B) that identifies the second client server (B_Server_N) and the session ID (D A) that identifies the first client server (A_Server_N);
d) checking in said received second application level protocol request if the session ID (ID_A) that identifies the first client server (A_Server_N) matches with the one included in the first application level protocol request; and
e) in case of matching, sending said second application level protocol request to the first client server (A_Server_N), enabling the later for a response.

2. The method of claim 1, wherein said session ID (ID_A) being included in said second application level protocol request upon having extracting it, said second client server (B_Server_N), from said received first application level protocol request.

3. The method of claim 1, wherein in said step c) the second application level protocol request is received either directly from the second client server (B_Server_N) or through the second farm load balancer (LB_FARM_B).

4. The method of claim 1, comprising in said step e) enabling said response either directly to the second client server (B_Server_N) or through the second farm load balancer (LB_FARM_B).

5. The method of any of previous claims, wherein said first and second application level protocol comprises a same protocol.

6. The method of any of previous claims 1 to 4, wherein said first and second application level protocol comprises different protocols.

7. The method of claims 5 or 6, wherein the first and second application level protocols are an application-layer protocol with a client-server model.

8. The method of claims 5 or 6, wherein the first and second application level protocols are selected from at least a Hyper Text Transport Protocol (HTTP), a Remote Authentication Dial In User Service (RADIUS) protocol, a Session Initiation Protocol (SIP) protocol, or combinations thereof.

9. A farm load balancing device for establishing a bi-directional server to server communication, said farm load balancing device having associated a plurality of client servers (A_Server_N) and configured to:
receive a first application level protocol request from at least one of said clients servers (A_Server_N) to start a first communication session with any of a client server associated to a second farm load balancer (LB_FARM_B), said first application level protocol request including information parameters at least including a session ID ( D A) that identifies said first client server (A_Server_N); and
send said first application level protocol request to a second client server (B_Server_N) through said second farm load balancer (LB_FARM_B),
and in that it comprises first means for extracting from the first application level protocol request said included session ID (D A) that identifies said first client server (A_Server_N), **characterized in that** said farm load balancing device is further configured to:
receive a second application level protocol request from said second client server (B_Server_N) to start a second communication session with the first client server (A_Server_N), said second application level protocol request including information parameters at least including a session ID (ID_B) that identifies the specific second client server (B_Server_N) and the session ID (ID_A) that identifies the first client server (A_Server_N); and
send, depending on a checking operation, said second application level protocol request to the first client server (A_Server_N),
and **in that** it further comprises second means for performing said checking operation by checking in said received second application level protocol request if the session ID (ID_A) that identifies the first client server (A_Server_N) matches with the one included in the first application level protocol request.

10. The farm load balancing device of claim 9, wherein is further configured to receive a response to the first application level protocol request from the second client server (B_Server_N) through said second farm load balancer (LB_FARM_B) and to forward said response to the first client server (A_Server_N).

11. The farm load balancing device of claims 9 or 10, wherein is further configured to receive a response to the second application level protocol request from the r first j client server (A_Server_N) and to forward said response to the second client server (B_Server_N) either directly or through the second farm load balancer (LB_FARM_B).

12. A computer program product comprising a computer usable medium having a computer readable program code embodied therein, said computer readable code adapted to be executed to implement a method for establishing a bidirectional server to server communication comprising steps a to e of claim 1.

## Patentansprüche

1. Verfahren zur Herstellung einer bidirektionalen Server-zu-Server-Kommunikation, wobei ein erster Farm-Lastverteiler (LB_FARM_A), dem eine Vielzahl von Client-Servern (A_Server_N) zugeordnet ist, folgende Schritte durchführt:
a) Empfangen einer ersten Anwendungsschichtprotokoll-Anfrage von mindestens einem der Client-Server (A_Server_N) zum Starten einer ersten Kommunikationssitzung mit einem beliebigen Client-Server, der einem zweiten Farm-Lastverteiler (LB_FARM_B) zugeordnet ist, wobei die erste Anwendungsschichtprotokoll-Anfrage Informationsparameter, die mindestens eine Sitzungs-ID (ID_A), die den ersten Client-Server (A_Server_N) identifiziert, enthalten, enthält; und
b) Senden der ersten Anwendungsschichtprotokoll-Anfrage an einen zweiten Client-Server (B_Server_N) durch den zweiten Farm-Lastverteiler (LB_FARM_B), und wobei der zweite Client-Server (B_Server_N) auf die erste Anwendungsschichtprotokoll-Anfrage durch den zweiten Farm-Lastverteiler (LB_FARM_B) antwortet, **dadurch gekennzeichnet, dass** der erste Farm-Lastverteiler (LB_FARM_A) ferner folgende Schritte ausführt:
c) Empfangen einer zweiten Anwendungsschichtprotokoll-Anfrage von dem zweiten Client-Server (B_Server_N) zum Starten einer zweiten Kommunikationssitzung mit dem ersten Client-Server (A_Server_N), wobei die zweite Anwendungsschichtprotokoll-Anfrage Informationsparameter, die mindestens eine Sitzungs-ID (ID_B), die den zweiten Client-Server (B_Server_N) identifiziert, und die Sitzungs-ID ( D A), die den ersten Client-Server (A_Server_N) identifiziert, enthalten, enthält;
d) Überprüfen in der empfangenen zweiten Anwendungsschichtprotokoll-Anfrage, ob die Sitzungs-ID (ID_A), die den ersten Client-Server (A_Server_N) identifiziert, mit derjenigen, die in der ersten Anwendungsschichtprotokoll-Anfrage enthalten ist, übereinstimmt; und
e) im Fall von Übereinstimmung, Senden der zweiten Anwendungsschichtprotokoll-Anfrage an den ersten Client-Server (A_Server_N), um den letzteren zu einer Antwort zu befähigen.

2. Verfahren nach Anspruch 1, wobei die Sitzungs-ID (ID_A) in der zweiten Anwendungsschichtprotokoll-Anfrage enthalten ist, nachdem der zweite Client-Server (B_Server_N) sie aus der empfangenen ersten Anwendungsschichtprotokoll-Anfrage entnommen hat.

3. Verfahren nach Anspruch 1, wobei in dem Schritt c) die zweite Anwendungsschichtprotokoll-Anfrage entweder direkt von dem zweiten Client-Server (B_Server_N) oder durch den zweiten Farm-Lastverteiler (LB_FARM_B) empfangen wird.

4. Verfahren nach Anspruch 1, das in dem Schritt e) die Ermöglichung der Antwort entweder direkt an den zweiten Client-Server (B_Server_N) oder durch den zweiten Farm-Lastverteiler (LB_FARM_B) umfasst.

5. Verfahren nach einem der vorhergehenden Ansprüche, wobei das erste und zweite Anwendungsschichtprotokoll ein gleiches Protokoll umfasst.

6. Verfahren nach einem der vorhergehenden Ansprüche 1 bis 4, wobei das erste und zweite Anwendungsschichtprotokoll verschiedene Protokolle umfasst.

7. Verfahren nach Anspruch 5 oder 6, wobei die ersten und zweiten Anwendungsschichtprotokolle ein Anwendungsschicht-Protokoll mit einem Client-Server-Modell sind.

8. Verfahren nach den Ansprüchen 5 oder 6, wobei die ersten und zweiten Anwendungsschichtprotokolle aus mindestens einem Hyper Text Transport Protocol (HTTP), einem Remote Authentication Dial In User Service (RADIUS)-Protokoll, einem Session Initiation Protocol (SIP)-Protokoll, oder Kombinationen davon, ausgewählt werden.

9. Farm-Lastverteilungsgerät zur Herstellung einer bidirektoralen Server-zu-Server-Kommunikation, wobei das Farm-Lastverteilungsgerät einer Vielzahl von Client-Servern (A_Server_N) zugeordnet ist und konfiguriert ist zum:
Empfangen einer ersten Anwendungsschichtprotokoll-Anfrage von mindestens einem der Client-Server (A_Server_N) zum Starten einer ersten Kommunikationssitzung mit einem beliebigen Client-Server, der einem zweiten Farm-Lastverteiler (LB_FARM_B) zugeordnet ist, wobei die erste Anwendungsschichtprotokoll-Anfrage Informationsparameter, die mindestens eine Sitzungs-ID ( D A), die den ersten Client-Server (A_Server_N) identifiziert, enthalten, enthält; und
Senden der ersten Anwendungsschichtprotokoll-Anfrage an einen zweiten Client-Server (B_Server_N) durch den zweiten Farm-Lastverteiler (LB_FARM_B), und dass es ein erstes Mittel zur Entnahme aus der ersten Anwendungsschichtprotokoll-Anfrage der enthaltenen Sitzungs-ID ( D A), die den ersten Client-Server (A-Server_N) identifiziert, umfasst, gekennzeichnet darin, dass das Farm-Lastverteilungsgerät ferner konfiguriert ist zum:
Empfangen einer zweiten Anwendungsschichtprotokoll-Anfrage von dem zweiten Client-Server (B_Server_N) zum Starten einer zweiten Kommunikationssitzung mit dem ersten Client-Server (A_Server_N), wobei die zweite Anwendungsschichtprotokoll-Anfrage Informationsparameter, die mindestens eine Sitzungs-ID (ID_B), die den spezifischen zweiten Client-Server (B_Server_N) identifiziert und die Sitzungs-ID (ID_A), die den ersten Client-Server (A_Server_N) identifiziert, enthalten, enthält; und
Senden, in Abhängigkeit von einem Überprüfungsvorgang, der zweiten Anwendungsschichtprotokoll-Anfrage an den ersten Client-Server (A_Server_N), und dass es ferner ein zweites Mittel zur Durchführung des Überprüfungsvorgangs durch Prüfen in der empfangenen zweiten Anwendungsschichtprotokoll-Anfrage, ob die Sitzungs-ID (ID_A), die den ersten Client-Server (A_Server_N) identifiziert, mit derjenigen, die in der ersten Anwendungsschichtprotokoll-Anfrage enthalten ist, übereinstimmt, umfasst.

10. Farm-Lastverteilungsgerät nach Anspruch 9, wobei es ferner zum Empfang einer Antwort auf die erste Anwendungsschichtprotokoll-Anfrage von dem zweiten Client-Server (B_Server_N) durch den zweiten Farm-Lastverteiler (LB_FARM_B) und zur Weiterleitung einer Antwort an den ersten Client-Server (A_Server_N) konfiguriert ist.

11. Farm-Lastverteilungsgerät nach Anspruch 9 oder 10, wobei es ferner zum Empfang einer Antwort auf die zweite Anwendungsschichtprotokoll-Anfrage von dem ersten Client-Server (A_Server_N) und zur Weiterleitung der Antwort an den zweiten Client-Server (B_Server_N) entweder direkt oder durch den zweiten Farm-Lastverteiler (LB_FARM_B) konfiguriert ist.

12. Computerprogrammprodukt, das ein computerverwendbares Medium mit einem darin enthaltenen computerlesbaren Programmcode umfasst, der computerlesbare Code zur Ausführung des Implementierens eines Verfahrens zur Herstellung einer bidirektoralen Server-zu-Server-Kommunikation geeignet, die Schritte a bis e des Anspruchs 1 umfassend.

## Revendications

1. Procédé pour établir une communication serveur-serveur bidirectionnelle, dans lequel un premier répartiteur de charge de ferme (LB_FERME_A) ayant associé une pluralité de clients-serveurs (A_Serveur_N) met en oeuvre les étapes suivantes :
a) recevoir une première requête de protocole de niveau d'application d'au moins l'un desdits clients-serveurs (A_Serveur_N) pour débuter une première session de communication avec l'un quelconque des clients-serveurs associés à un deuxième répartiteur de charge de ferme (LB_FERME_B), ladite première requête de protocole de niveau d'application incluant des paramètres d'informations incluant au moins une session ID (ID A) qui identifie ledit premier client-serveur (A_Serveur_N) ; et
b) envoyer ladite première requête de protocole de niveau d'application à un deuxième client-serveur (B_Serveur_N) par le biais dudit deuxième répartiteur de charge de ferme (LB_FERME_B), et répondre, par ledit deuxième client-serveur (B_Serveur_N), à la première requête de protocole de niveau d'application par le biais dudit deuxième répartiteur de charge de ferme (LB_FERME_B), **caractérisé en ce que** ledit premier répartiteur de charge de ferme (LB_FERME_B) met en oeuvre en outre les étapes suivantes :
c) recevoir une deuxième requête de protocole de niveau d'application dudit deuxième client-serveur (B_Serveur_N) pour débuter une deuxième session de communication avec le premier client-serveur (A_Serveur_N), ladite deuxième requête de protocole de niveau d'application incluant des paramètres d'informations incluant au moins une session ID (ID_B) qui identifie le deuxième client-serveur (B_Serveur_N) et la session ID (D A) qui identifie le premier client-serveur (A_Serveur_N) ;
d) vérifier dans ladite deuxième requête de protocole de niveau d'application reçue si la session ID (ID_A) qui identifie le premier client-serveur (A_Serveur_N) concorde avec celle incluse dans la première requête de protocole de niveau d'application ; et
e) en cas de concordance, envoyer ladite deuxième requête de protocole de niveau d'application au premier client-serveur (A_Serveur_N), permettant à ce dernier pour une réponse.

2. Procédé selon la revendication 1, dans lequel ladite session ID (ID_A) est incluse dans ladite deuxième requête de protocole de niveau d'application après l'avoir retirée, par ledit deuxième client-serveur (B_Serveur_N), de ladite première requête de protocole de niveau d'application reçue.

3. Procédé selon la revendication 1, dans lequel dans ladite étape c) la deuxième requête de protocole de niveau d'application est reçue soit directement du deuxième client-serveur (B_Serveur_N) soit par le biais du deuxième répartiteur de charge de ferme (LB_FERME_B).

4. Procédé selon la revendication 1, comprenant dans ladite étape e) permettre ladite réponse soit directement au deuxième client-serveur (B_Serveur_N) soit par le biais du deuxième répartiteur de charge de ferme (LB_FERME_B).

5. Procédé selon l'une quelconque des revendications précédentes, dans lequel lesdits premier et deuxième protocoles de niveau d'application comprennent un même protocole.

6. Procédé selon l'une quelconque des revendications précédentes 1 à 4, dans lequel lesdits premier et deuxième protocoles de niveau d'application comprennent différents protocoles.

7. Procédé selon les revendications 5 ou 6, dans lequel les premier et deuxième protocoles de niveau d'application sont un protocole de couche d'application avec un modèle de client-serveur.

8. Procédé selon les revendications 5 ou 6, dans lequel les premier et deuxième protocoles de niveau d'application sont choisis parmi au moins un Protocole de transfert hypertexte (HTTP), un protocole de Service d'accès à distance d'utilisateur par réseau commuté (RADIUS), un protocole de Protocole d'initiation de session (SIP), ou des combinaisons de ceux-ci.

9. Dispositif de répartition de charge de ferme pour établir une communication serveur-serveur bidirectionnelle, ledit dispositif de répartition de charge de ferme ayant associé une pluralité de clients-serveurs (A_Serveur_N) et configurés pour :
recevoir une première requête de protocole de niveau d'application d'au moins un desdits clients-serveurs (A_Serveur_N) pour débuter une première session de communication avec l'un quelconque des clients-serveurs associés à un deuxième répartiteur de charge de ferme (LB_FERME_B), ladite première requête de protocole de niveau d'application incluant des paramètres d'informations incluant au moins une session ID (D A) qui identifie ledit premier client-serveur (A Serveur N) ; et
envoyer ladite première requête de protocole de niveau d'application à un deuxième client-serveur (B_Serveur_N) par le biais dudit deuxième répartiteur de charge de ferme (LB FERME B), et en ce qu'il comprend des premiers moyens pour retirer de la première requête de protocole de niveau d'application ladite session ID (D A) incluse qui identifie ledit premier client-serveur (A_Serveur_N), **caractérisé en ce que** ledit dispositif de répartition de charge de ferme est configuré en outre pour :
recevoir une deuxième requête de protocole de niveau d'application dudit deuxième client-serveur (B_Serveur_N) pour débuter une deuxième session de communication avec le premier client-serveur (A_Serveur_N), ladite deuxième requête de protocole de niveau d'application incluant des paramètres d'informations incluant au moins une session ID (ID_B) qui identifie le deuxième client-serveur spécifique (B_Serveur_N) et la session ID (ID_A) qui identifie le premier client-serveur (A_Serveur_N) ; et
envoyer, en fonction d'une opération de vérification, ladite deuxième requête de protocole de niveau d'application au premier client-serveur (A_Serveur_N),
et **en ce qu'**il comprend en outre des deuxièmes moyens pour mettre en oeuvre ladite opération de vérification en vérifiant dans ladite deuxième requête de protocole de niveau d'application reçue si la session ID (ID_A) qui identifie le premier client-serveur (A_Serveur_N) concorde avec la deuxième incluse dans la première requête de protocole de niveau d'application.

10. Dispositif de répartition de charge de ferme selon la revendication 9, dans lequel il est en outre configuré pour recevoir une réponse à la première requête de protocole de niveau d'application du deuxième client-serveur (B_Serveur_N) par le biais dudit deuxième répartiteur de charge de ferme (LB_FERME_B) et pour transmettre ladite réponse au premier client-serveur (A_Serveur_N).

11. Dispositif de répartition de charge de ferme selon la revendication 9 ou 10, dans lequel il est en outre configuré pour recevoir une réponse à la deuxième requête de protocole de niveau d'application du premier client-serveur (A_Serveur_N) et pour transmettre ladite réponse au deuxième client-serveur (B_Serveur_N) soit directement soit par le biais du deuxième répartiteur de charge de ferme (LB_FERME_B).

12. Produit de programme informatique comprenant un support utilisable par ordinateur ayant un code de programme lisible par ordinateur incorporé à celui-ci, ledit code lisible par ordinateur étant adapté pour être exécuté pour réaliser un procédé pour établir une communication serveur-serveur bidirectionnelle comprenant les étapes de a à e selon la revendication 1.
